# EUROPÄISCHE PATENTSCHRIFT

(11) **EP 3 321 424 B1**
(45) Veröffentlichungstag und Bekanntmachung des Hinweises auf die Patenterteilung: **29.09.2021**
(21) Anmeldenummer: 16198414.1
(22) Anmeldetag: 11.11.2016
(51) Int. Cl.: E02D 27/42, E02D 27/14

(54) **GRÜNDUNGSELEMENT UND VERFAHREN ZUM HERSTELLEN EINES GRÜNDUNGSELEMENTS**
FOUNDATION ELEMENT AND PROCEDURE TO PRODUCE OF A FOUNDATION ELEMENT
ÉLÉMENT DE FONDATION ET LA PROCÉDURE POUR PRODUIRE D'UN ÉLÉMENT DE FONDATION

(43) Veröffentlichungstag der Anmeldung: 16.05.2018
(73) Patentinhaber: BAUER Spezialtiefbau GmbH, 86529 Schrobenhausen (DE)
(72) Erfinder:
(74) Vertreter: Wunderlich & Heim Patentanwälte Partnerschaftsgesellschaft mbB

(56) Entgegenhaltungen:
- DE-A1- 3 149 636
- DE-A1-102012 020 871
- DE-A1-102012 024 412
- JP-A- 2000 161 793
- US-A1- 2005 139 353
- US-A1- 2009 065 255

## Beschreibung

Die Erfindung betrifft ein Gründungselement im Boden, welches auch aus einer aushärtbaren Masse gebildet ist, wobei vor einer Aushärtung mindestens ein Wärmetauscherelement eingesetzt ist, gemäß dem Oberbegriff des Anspruchs 1.

Die Erfindung betrifft weiterhin ein Verfahren zum Herstellen eines Gründungselementes, bei dem in einem Boden ein Loch erstellt wird, in welchem mittels einer aushärtbaren Masse ein Gründungselement gebildet wird, wobei vor dem Aushärten der Masse mindestens ein Wärmetauscherelement eingesetzt wird, gemäß dem Oberbegriff des Anspruchs 9.

Beim Erstellen von Gebäuden kann es abhängig von den Bodenverhältnissen notwendig sein, spezielle Gründungsmaßnahmen für das Bauwerk vorzusehen. Beispielsweise kann es erforderlich sein, Bohrpfähle vorzusehen, um die Bauwerkslast in tiefere Bodenschichten abzutragen.

Weiterhin können Gründungsmaßnahmen mit Erstellung von Gründungselementen auch ein Erstellen von Stütz- oder Dichtwänden im Boden umfassen. Derartige Gründungselemente können beispielsweise als Bohrpfahlwände oder Schlitzwände ausgeführt sein.

Es ist grundsätzlich bekannt, derartige Gründungselemente geothermisch zu aktivieren. Hierzu können Wärmetauschelemente in die Gründungselemente eingebaut werden, so dass das Wärmepotenzial des Bodens für eine geothermische Heizung mittels einer Wärmepumpe genutzt werden kann. In umgekehrter Weise kann auch für eine Klimatisierung eines Gebäudes überschüssige Wärme über die Wärmetauschelemente in den Gründungselementen in den Boden abgeführt werden.

Insbesondere für die Kühlung eines Gebäudes ist die Ableitung von überschüssiger Wärme in den Boden unter Umweltgesichtspunkten, insbesondere auch unter Berücksichtigung der Lärmemission vorteilhafter, als die Abgabe von überschüssiger Wärme in die Umgebungsluft.

Aus der JP 2000-161793 A geht ein System zur geothermischen Nutzung bei einem Damm um ein Speicherbecken hervor. Dabei werden in einem lockeren Boden Löcher eingebracht, in welche dann ein Wärmetauschelement eingesetzt wird. Über ein Zuführrohr wird eine aushärtbare Masse so eingeleitet, dass diese in den umgebenden lockeren Boden eindringt.

Im Boden einsetzbare Wärmetauscher sind aus der DE 31 49 636 A1 bekannt.

Ein gattungsgemäßer Stand der Technik geht aus der US 2005/0139353 A1 und der US 2009/0065255 A1 hervor. Hierin wird jeweils das Herstellen eines Gründungselementes im Boden mit einem Wärmetauscher durch ein Vibrationsbohren beschrieben. Dabei wird zunächst ein Bohrloch hergestellt, in dem sich Stützflüssigkeit mit dem Bohrklein verbindet. Dieses wird dann durch eine aushärtbare Suspension ausgetauscht, in welcher das Wärmetauscherelement eingesetzt wird.

Der Erfindung liegt die **Aufgabe** zugrunde, ein Gründungselement im Boden sowie ein Verfahren zum Herstellen des Gründungselementes anzugeben, welche besonders gut für eine geothermische Aktivierung geeignet sind.

Die Aufgabe wird zum einen durch ein Gründungselement mit den Merkmalen des Anspruchs 1 und zum anderen durch ein Verfahren mit den Merkmalen des Anspruchs 9 gelöst. Bevorzugte Ausführungsformen der Erfindung sind in den jeweils abhängigen Ansprüchen angegeben.

Das erfindungsgemäße Gründungselement ist dadurch gekennzeichnet, dass ein Übergangsbereich zum umgebenden Boden vorgesehen ist, in welchem das Gründungselement aus zerkleinertem Bodenmaterial des umgebenden Bodens mit einer aushärtenden Suspension gebildet ist.

Die Erfindung beruht auf der Erkenntnis, dass eine effiziente Nutzung von Gründungselementen zur geothermischen Aktivierung maßgeblich vom Wärmeübergang zwischen dem Gründungselement und dem umgebenden Boden abhängt. Dabei wurde festgestellt, dass ein definierter Übergang zwischen dem Gründungselement einerseits und dem umgebenden Boden andererseits für einen effizienten Wärmeübergang nicht förderlich ist. Vielmehr beruht die Erfindung im Wesentlichen darauf, zwischen dem Gründungselement und dem umgebenden Boden einen speziellen Übergangsbereich vorzusehen, in welchem das Gründungselement aus zerkleinertem Bodenmaterial des umgebenden Bodens mit einer aushärtenden Suspension gebildet ist. Es besteht sozusagen ein fließender oder unscharfer Übergang zwischen dem Gründungselement und dem umgebenden Boden. Dies führt gerade in thermischer Hinsicht dazu, dass das Gründungselement in den umgebenden Boden besser eingebunden ist. Das Gründungselement kann so besser Wärme an den umgebenden Boden abgeben beziehungsweise Wärme des umgebenden Bodens aufnehmen. Durch das Fehlen einer klaren Trennschicht wird der Wärmeübergang weniger behindert. Eine mögliche Erklärung hierfür kann darin gesehen werden, dass das Gründungselement mit einer großen inneren Oberfläche in den Boden eingebunden ist. Dies erlaubt eine verbesserte Wärmeübertragung.

Nach der Erfindung besteht der Übergangsbereich mindestens zu 30%, vorzugsweise zwischen 40% bis 80%, aus zerkleinertem umgebenden Bodenmaterial.

Eine besonders gute thermische Einbindung wird nach der Erfindung dadurch erzielt, dass der Anteil an zerkleinertem Bodenmaterial nach außen hin zunimmt. Dies erlaubt einerseits eine hohe Festigkeit des Gründungselementes in einem Kernbereich sowie eine gute thermische Anbindung nach außen.

Bei einer weiteren Ausführungsvariante der Erfindung ist es vorteilhaft, dass in einem Mittenbereich des Gründungselementes mindestens ein metallisches Armierungselement eingesetzt ist. Das Armierungselement kann ein Bewehrungskorb aus Baustahl oder ein Träger sein, welcher ebenfalls vorzugsweise aus Baustahl gebildet ist. Hierdurch wird weiterhin eine hohe Stabilität und Festigkeit des Gründungselementes sichergestellt.

Nach einer Weiterbildung der Erfindung ist es dabei vorteilhaft, dass das mindestens eine metallische Armierungselement in Kontakt mit dem mindestens einen Wärmetauscherelement ist. Vorzugsweise ist das Wärmetauscherelement, welches vorzugsweise eine Rohr- oder Schlauchleitung für ein wärmetransportierendes Fluid ist, fest an dem Armierungselement angeordnet. Somit kann das metallische Armierungselement eine Wärmeübertragung der Wärme von dem Wärmetauscherelement in das Gründungselement unterstützten.

Nach der Erfindung ist vorgesehen, dass der Übergangsbereich mindestens 10% der Wandstärke des Gründungselementes beträgt. In dem verbliebenen Kernbereich des Gründungselementes kann das Gründungselement aus einer herkömmlichen Betonmasse hergestellt sein. Grundsätzlich kann das Gründungselement insgesamt unter Verwendung von zerkleinertem Bodenmaterial gebildet sein.

Besonders bevorzugt ist es nach der Erfindung, dass der Übergangsbereich zwischen 20% bis 50% der Wandstärke des Gründungselementes beträgt. Die Wandstärke kann dabei einen Durchmesser bei einem Bohrpfahl oder die Wanddicke bei einer Stütz- oder Schlitzwand sein. Diese kann als eine Bohrpfahlwand aus sich teilweise überschneidenden Bohrpfählen oder aus Schlitzwandpaneelen mit rechteckigem Querschnitt gebildet sein.

Eine weitere bevorzugte Ausführungsform der Erfindung besteht darin, dass die aushärtbare Suspension Zementleim oder eine Zementsuspension aufweist. Dabei wird im Boden zunächst mittels eines Bohrwerkzeugs oder mittels einer Schlitzwandfräse ein Loch erstellt, in welchem zumindest teilweise das abgetragene zerkleinerte Bodenmaterial verbleibt. Vorzugsweise beim Erstellen des Bohrloches wird eine aushärtbare Suspension, insbesondere Zementleim, zugegeben, um diese mit dem zerkleinerten Bodenmaterial zu vermengen und so einen Bodenmörtel zumindest in einem Außenbereich des Loches oder über den gesamten Lochquerschnitt zu erstellen. Grundsätzlich ist es möglich, beim Zurückziehen des Werkzeugs, insbesondere des Bohrwerkzeuges, etwa über ein Seelenrohr in einen Mittenbereich des Gründungselementes eine Betonmasse zuzuführen, welche sich von dem zuvor hergestellten Bodenmörtel unterscheidet. Auf diese Weise kann ein Gründungselement mit einer unterschiedlichen Materialkonsistenz über den Querschnitt gebildet werden.

Nach einer Weiterbildung der Erfindung ist es vorteilhaft, dass das Wärmetauscherelement eine Schlauch- oder Rohrleitung aufweist, welche sich entlang des Gründungselementes von einer Oberseite zu einer Unterseite und wieder zurück erstreckt. An der Oberseite des Gründungselementes kann so das Wärmetauscherelement an einen Heiz- oder Kühlreislauf einer Heiz- und/oder einer Klimaanlage angeschlossen werden. Die Anlage kann dabei vorzugsweise eine Wärmepumpe umfassen, um so einen für die Wärmeübertragung höheren Temperaturunterschied einzustellen.

Die Schlauch- oder Rohrleitung kann eine einzelne Schlaufe im unteren Bereich des Gründungselementes oder eine wendelförmige Leitungsführung aufweisen, um so eine Kontaktfläche zu erhöhen. Die Leitung kann als eine kostengünstige Kunststoffleitung oder eine metallische Rohrleitung ausgebildet sein, welche einen höheren Wärmeleitungskoeffizienten aufweist.

Das Wärmetauscherelement kann grundsätzlich zu einem beliebigen, geeigneten Zeitpunkt in das Gründungselement eingebracht werden. Besonders vorteilhaft ist es, das Wärmetauschelement nach Erstellen des Gründungselementes und vor dessen Aushärtung in die noch fließfähige Masse des Gründungselementes einzubringen. Das Einbringen kann getrennt oder gleichzeitig mit dem Einbringen eines metallischen Armierungselementes, etwa eines Bewehrungskorbes oder eines Stahlträgers, erfolgen.

Nach einer Weiterbildung der Erfindung ist es dabei besonders vorteilhaft, dass an einem unteren schlaufenförmigen Endbereich des Wärmetauscherelementes mindestens ein Deckblech angeordnet ist. Das Deckblech kann dabei winkelförmig abgekantet und nach unten gerichtet sein, so dass ein verbessertes Eindrücken des Wärmetauscherelementes in das noch nicht ausgehärtete Gründungselement ermöglicht wird. Das Deckblech bietet dabei einen Schutz gegen das zerkleinerte Bodenmaterial in der Masse des Gründungselementes.

Das erfindungsgemäße Verfahren ist dadurch gekennzeichnet, dass das Gründungselement zum umgebenden Boden mit einem Übergangsbereich ausgebildet wird, in welchem das Gründungselement aus zerkleinertem Bodenmaterial und einer aushärtbaren Suspension gebildet wird.

Mit diesem Verfahren kann vorzugsweise das zuvor beschriebene Gründungselement hergestellt werden. Entsprechend können die zuvor beschriebenen Vorteile erreicht werden.

Grundsätzlich kann das Loch zum Bilden des Gründungselementes in beliebiger Weise erstellt werden. Besonders vorteilhaft ist es nach einer Ausführungsform der Erfindung, dass das Loch durch Bohren oder Fräsen hergestellt wird. Hierfür können entsprechende Bohrgeräte oder Schlitzwandfräsen eingesetzt werden, welche anstehendes Bodenmaterial zerkleinern. Dieses zerkleinerte Bodenmaterial kann zunächst aus dem Loch abgeführt und nach Bilden einer aushärtbaren Masse zumindest teilweise wieder in das Loch rückgeführt werden, um zu dem Gründungselement auszuhärten. Alternativ kann das beim Bohren oder Fräsen zerkleinerte Bodenmaterial zumindest teilweise im Bohrloch verbleiben und dort insitu durch Zuführen einer aushärtbaren Suspension zu einem Bodenmörtel vermischt werden, welcher dann zum Gründungselement aushärtet.

Eine weitere bevorzugte Verfahrensvariante besteht darin, dass das mindestens eine Wärmetauscherelement an mindestens einem Armierungselement befestigt und gemeinsam mit diesem in das Loch eingesetzt wird. Auf diese Weise kann das Wärmetauscherelement positionsgenau eingebracht werden. Zudem kann das metallische Armierungselement zur verbesserten Wärmeübertragung zwischen dem Wärmetauscherelement und der Bodenmörtelmasse des Gründungselementes beitragen.

## Patentansprüche

1. Gründungselement im Boden, welches in einem Loch im Boden aus einer aushärtbaren Masse gebildet ist, wobei vor einer Aushärtung mindestens ein Wärmetauscherelement eingesetzt ist, wobei ein Übergangsbereich zum umgebenden Boden gebildet ist,
wobei das Gründungselement in dem Übergangsbereich zum umgebenden Boden aus zerkleinertem Bodenmaterial des umgebenden Bodens vermengt mit einer aushärtenden Suspension gebildet ist, wobei ein Bodenmörtel gebildet wird, **dadurch gekennzeichnet,**
**dass** der Übergangsbereich mindestens zu 30% aus zerkleinertem Bodenmaterialbesteht,
**dass** der Übergangsbereich mindestens 10% der Wandstärke des Gründungselementes beträgt, und
**dass** der Anteil an zerkleinertem Bodenmaterial nach außen hin zunimmt.

2. Gründungselement nach Anspruch 1,
**dadurch gekennzeichnet,**
**dass** der Übergangsbereich zwischen 40% bis 80% aus zerkleinertem Bodenmaterial besteht.

3. Gründungselement nach einem der Ansprüche 1 oder 2,
**dadurch gekennzeichnet,**
**dass** in einem Mittenbereich des Gründungselementes mindestens ein metallisches Armierungselement eingesetzt ist.

4. Gründungselement nach Anspruch 3,
**dadurch gekennzeichnet,**
**dass** das mindestens eine metallische Armierungselement in Kontakt mit dem mindestens einen Wärmetauscherelement ist.

5. Gründungselement nach einem der Ansprüche 1 bis 4,
**dadurch gekennzeichnet,**
**dass** der Übergangsbereich zwischen 20% bis 50% der Wandstärke des Gründungselementes beträgt.

6. Gründungselement nach einem der Ansprüche 1 bis 5,
**dadurch gekennzeichnet,**
**dass** die aushärtbare Suspension Zementleim oder eine Zementsuspension aufweist.

7. Gründungselement nach einem der Ansprüche 1 bis 6,
**dadurch gekennzeichnet,**
**dass** das Wärmetauscherelement eine Schlauch- oder Rohrleitung aufweist, welche sich entlang des Gründungselementes von einer Oberseite zu einer Unterseite und wieder zurück erstreckt.

8. Gründungselement nach einem der Ansprüche 1 bis 7,
**dadurch gekennzeichnet,**
**dass** an einem unteren schlaufenförmigen Endbereich des Wärmetauscherelementes mindestens ein Deckblech angeordnet ist.

9. Verfahren zum Herstellen eines Gründungselementes nach einem der Ansprüche 1 bis 8,
bei dem in einem Boden ein Loch erstellt wird, in welchem mittels einer aushärtbaren Masse ein Gründungselement gebildet wird, wobei vor dem Aushärten der Masse mindestens ein Wärmetauscherelement eingesetzt wird, wobei das Gründungselement zum umgebenden Boden mit einem Übergangsbereich ausgebildet wird,
wobei das Gründungselement in dem Übergangsbereich aus Bodenmörtel aus zerkleinertem Bodenmaterial vermengt mit einer aushärtbaren Suspension gebildet wird,
**dadurch gekennzeichnet,**
**dass** der Übergangsbereich mindestens zu 30% aus zerkleinertem Bodenmaterialbesteht,
**dass** der Übergangsbereich mindestens 10% der Wandstärke des Gründungselementes beträgt, und
**dass** der Anteil an zerkleinertem Bodenmaterial nach außen hin zunimmt.

10. Verfahren nach Anspruch 9,
**dadurch gekennzeichnet,**
**dass** das Loch durch Bohren oder Fräsen hergestellt wird.

11. Verfahren nach Anspruch 9 oder 10,
**dadurch gekennzeichnet,**
**dass** das mindestens eine Wärmetauscherelement an mindestens einem Armierungselement befestigt und gemeinsam mit diesem in das Loch eingesetzt wird.

## Claims

1. Foundation element in the ground, which is formed in a hole in the ground of a hardenable mass, wherein, prior to hardening, at least one heat exchanger element is inserted, wherein a transition region towards the surrounding ground is formed,
wherein the foundation element is formed in the transition region towards the surrounding ground of crushed ground material of the surrounding ground mixed with a hardening suspension, whereby a soil mortar is formed,
**characterized in that**
the transition region consists of at least 30 % of crushed surrounding ground material,
**in that** the transition region amounts to at least 10 % of the wall thickness of the foundation element, and
**in that** the proportion of crushed ground material increases towards the outside.

2. Foundation element according to claim 1,
**characterized in that**
the transition region consists of between 40 % to 80 %, of crushed surrounding ground material.

3. Foundation element according to any one of claims 1 or 2,
**characterized in that**
in a center region of the foundation element at least one metal reinforcing element is inserted.

4. Foundation element according to claim 3,
**characterized in that**
the at least one metal reinforcing element is in contact with the at least one heat exchanger element.

5. Foundation element according to any one of claims 1 to 4,
**characterized in that**
the transition region amounts to between 20 % to 50 % of the wall thickness of the foundation element.

6. Foundation element according to any one of claims 1 to 5,
**characterized in that**
the hardenable suspension has cement paste or a cement suspension.

7. Foundation element according to any one of claims 1 to 6,
**characterized in that**
the heat exchanger element has a hose line or pipeline which extends along the foundation element from an upper side to an underside and back again.

8. Foundation element according to any one of claims 1 to 7,
**characterized in that**
on a lower loop-shaped end region of the heat exchanger element at least one cover plate is arranged.

9. Method for producing a foundation element according to any one of claims 1 to 8, in which a hole is produced in ground, in which a foundation element is formed by means of a hardenable mass, wherein, prior to the hardening of the mass, at least one heat exchanger element is inserted, wherein the foundation element is formed with a transition region towards the surrounding ground,
wherein the foundation element in the transition region is formed of soil mortar existing of crushed ground material mixed with a hardenable suspension,
**characterized in that**
the transition region consists of at least 30 % of crushed surrounding ground material,
**in that** the transition region amounts to at least 10 % of the wall thickness of the foundation element, and
**in that** the proportion of crushed ground material increases towards the outside.

10. Method according to claim 9,
**characterized in that**
the hole is produced through drilling or cutting.

11. Method according to claim 9 or 10,
**characterized in that**
the at least one heat exchanger element is fixed on at least one reinforcing element and inserted together with this into the hole.

## Revendications

1. Elément de fondation dans le sol, lequel est formé dans un trou dans le sol à partir d'une masse durcissable, dans lequel au moins un élément échangeur de chaleur est inséré avant un durcissement, dans lequel une zone de transition vers le sol environnant est formée,
dans lequel l'élément de fondation dans la zone de transition vers le sol environnant est formé de matériau de sol broyé du sol environnant mélangé à une suspension durcissante, un mortier de sol étant formé,
**caractérisé en ce**
**que** la zone de transition est constituée au moins à 30 % de matériau de sol broyé, que la zone de transition atteint au moins 10 % de l'épaisseur de paroi de l'élément de fondation, et
**que** la part de matériau de sol broyé augmente en direction de l'extérieur.

2. Elément de fondation selon la revendication 1,
**caractérisé en ce**
**que** la zone de transition est constituée d'entre 40 % à 80 % de matériau de sol broyé.

3. Elément de fondation selon l'une quelconque des revendications 1 ou 2, **caractérisé en ce**
**qu'**au moins un élément d'armature métallique est inséré dans une zone centrale de l'élément de fondation.

4. Elément de fondation selon la revendication 3,
**caractérisé en ce**
**que** l'au moins un élément d'armature métallique est en contact avec l'au moins un élément échangeur de chaleur.

5. Elément de fondation selon l'une quelconque des revendications 1 à 4,
**caractérisé en ce**
**que** la zone de transition atteint entre 20 % et 50 % de l'épaisseur de paroi de l'élément de fondation.

6. Elément de fondation selon l'une quelconque des revendications 1 à 5,
**caractérisé en ce**
**que** la suspension durcissable présente de la pâte de ciment ou une suspension de ciment.

7. Elément de fondation selon l'une quelconque des revendications 1 à 6,
**caractérisé en ce**
**que** l'élément échangeur de chaleur présente une conduite flexible ou tubulaire, laquelle s'étend le long de l'élément de fondation à partir d'une face supérieure jusqu'à une face inférieure et inversement.

8. Elément de fondation selon l'une quelconque des revendications 1 à 7,
**caractérisé en ce**
**qu'**au moins une tôle de recouvrement est disposée sur une zone d'extrémité inférieure en forme de boucle de l'élément échangeur de chaleur.

9. Procédé pour fabriquer un élément de fondation selon l'une quelconque des revendications 1 à 8,
selon lequel un trou, dans lequel un élément de fondation est formé au moyen d'une masse durcissable, est produit dans un sol, dans lequel au moins un élément échangeur de chaleur est inséré avant le durcissement de la masse, dans lequel l'élément de fondation est réalisé vers le sol environnant avec une zone de transition,
dans lequel l'élément de fondation dans la zone de transition est formé de mortier de sol composé de matériau de sol broyé mélangé à une suspension durcissable, **caractérisé en ce**
**que** la zone de transition est constituée au moins à 30 % de matériau de sol broyé, que la zone de transition atteint au moins 10 % de l'épaisseur de paroi de l'élément de fondation, et
**que** la part de matériau de sol broyé augmente en direction de l'extérieur.

10. Procédé selon la revendication 9,
**caractérisé en ce**
**que** le trou est obtenu par perçage ou fraisage.

11. Procédé selon la revendication 9 ou 10,
**caractérisé en ce**
**que** l'au moins un élément échangeur de chaleur est fixé sur au moins un élément d'armature et inséré conjointement avec celui-ci dans le trou.
